Europäisches Patentamt

(19) European Patent Office

Office européen des brevets

(11) Publication number: **0 010 318**
**B1**

(12) **EUROPEAN PATENT SPECIFICATION**

(45) Date of publication of patent specification: **10.11.82**

(51) Int. Cl.³: **C 09 D 3/81, C 09 D 3/74,**
**C 08 L 33/14, C 08 F 8/44**

(21) Application number: **79104115.5**

(22) Date of filing: **23.10.79**

(54) **Water-thinnable coating compositions from aminoalkylated interpolymers.**

(30) Priority: **24.10.78 US 954256**

(43) Date of publication of application:
**30.04.80 Bulletin 80/9**

(45) Publication of the grant of the patent:
**10.11.82 Bulletin 82/45**

(84) Designated Contracting States:
**BE DE FR GB NL SE**

(56) References cited:
**US - A - 3 372 149**
**US - A - 3 719 629**

(73) Proprietor: **THE DOW CHEMICAL COMPANY**
**Dow Center 2030 Abbott Road Post Office Box 1967**
**Midland Michigan 48640 (US)**

(72) Inventor: **McFadden, Russell Thomson**
**Route 1**
**Freeport Brazoria, Texas (US)**
Inventor: **Krause, Reuben Louis**
**1009 Southside Drive**
**Angleton Brazoria, Texas (US)**
Inventor: **Young, Richard Gregg**
**2911 Highbrook**
**Midland Midland, Michigan (US)**

(74) Representative: **Weickmann, Heinrich, Dipl.-Ing. et al,**
**Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22**
**D-8000 München 86 (DE)**

Water-thinnable coating compositions from aminoalkylated interpolymers

Water-thinnable epoxy coating compositions have been prepared using, as curing agents, aminoethylated vinyl polymers acidified with hydrochloric acid or various monocarboxylic acids. Such compositions cure under ambient conditions when those conditions are warm and dry. However, they do not cure in acceptable times when the conditions are cool and/or damp as is a common occurrence when exterior coatings are to be applied. A need exists for a composition that will cure under adverse conditions.

The present invention is directed to a water-thinnable coating composition comprising a water-miscible solvent, a water-soluble acidified aminoalkylated vinyl interpolymer and an epoxy resin characterized in that the aminoalkylated vinyl interpolymer is acidified with hydrobromic acid optionally containing up to 30 mole percent hydrochloric acid. Preferably, the interpolymer is acidified with a mixture of 80 mole percent hydrobromic acid and 20 mole percent hydrochloric acid. The coating compositions of this invention demonstrate excellent cure rates even under cool and/or damp conditions.

Vinyl interpolymers containing carboxylic acid groups useful in this invention are generally prepared from a solution of a mixture of monomers, one of which is a vinyl carboxylic acid monomer. The monomer mixture is polymerized in the presence of a catalyst and usually under controlled elevated temperatures with agitation until the polymerization reaction is complete. Various modifications commonly practiced with solution polymerization reactions can be utilized, modifications such as stepwise addition of the monomer mixture during the polymerization, incremental addition of catalyst, polymerization under an inert atmosphere and continuous or batch polymerization. The details of such polymerization are well known and need not be discussed further herein.

Suitable vinyl carboxylic acid monomers include ethylenically unsaturated monocarboxylic acids such as methacrylic acid, atropic acid (alpha-phenyl acrylic acid), angelic acid (Cis-2-methyl-2-butenoic acid) and tiglic acid (trans-2-methyl-2-butenoic acid). It is important that the carbon alpha to the carboxylic acid group bears no hydrogen atom. Preferably, the vinyl carboxylic acid is methacrylic acid.

The vinyl interpolymer is prepared by copolymerizing a vinyl carboxylic acid with one or more copolymerizable monomers such as, for example, vinyl aromatic monomers, alkyl esters of unsaturated monocarboxylic acids, dialkyl esters of unsaturated dicarboxylic acids, vinyl and vinylidene chloride and fluoride and N-vinyl pyrrolidone.

Suitable vinyl aromatic monomers include styrene, $\alpha$-methylstyrene, vinyltoluene, the various alkyl-substituted styrenes, the various halo-substituted styrenes and vinyl naphthalene. The more preferred of these monomers are styrene, $\alpha$-methylstyrene and vinyltoluene. Suitable alkyl esters of unsaturated mono- and dicarboxylic acids include the esters prepared from aliphatic alcohols containing from 1 to 12 carbon atoms and from cyclohexyl alcohol with the vinyl carboxylic acids cited previously. The acrylic and methacrylic esters are preferred; most preferred of these monomers are methyl, ethyl, isopropyl, butyl and 2-ethylhexyl acrylates or methacrylates. Various amounts of acrylonitrile, or methacrylonitrile, less than 40 percent, may also be used to improve the film properties.

The vinyl interpolymers are preferably prepared with a sufficient amount of a vinyl carboxylic acid monomer to provide from 1 to 20 percent by weight of carboxylic acid (as —COOH) and the balance of said interpolymer is comprised of one or more of the copolymerizable monomers. Preferably, the carboxylic acid content ranges from 3 to 12 weight percent. Mixtures of vinyl aromatic monomers and alkyl esters of vinyl carboxylic acids may be advantageously used.

Suitable solvents for the polymerization include alcohols, glycols and glycol ethers or mixtures thereof. The polymerization temperature may range from 60° to 140°C, with a preferred range of 80° to 100°C. The particular temperature is variable depending on the monomers, the catalyst and other conditions.

Aminoalkylated vinyl interpolymers useful in this invention are prepared by an amination reaction in which the vinyl carboxylic acid interpolymer in a suitable solvent is reacted with an excess of an alkylenimine or an N-(aminoalkyl) substituted alkylenimine. Suitable alkylenimines include the 1,2-alkylenimines such as ethylenimine, propylenimine and butylenimine and mixtures thereof. Ethylenimine is readily available in commercial quantities and is preferred. Also useful are the N-(aminoalkyl) substituted alkylenimines since they react similarly to the alkylenimines with a carboxylic acid group but are less volatile than the alkylenimines. Exemplary of these compounds are N-(2-aminoethyl) aziridine, N-(3-aminopropyl) aziridine, N-(2-aminopropyl) propylenimine and N-(2-aminobutyl) butylenimine.

To obtain a plurality of amine groups per carboxylic acid group, at least 1.5 moles of an alkylenimine per equivalent of carboxylic acid are reacted with the vinyl carboxylic acid interpolymer. Preferably, the number of moles of alkylenimine ranges from 2 to 5.

The temperature of the amination reaction is best conducted at at least 50°C and preferably from 50° to 100°C, although higher temperatures and super-atmospheric pressures may be used.

After completion of the amination reaction, the solvent composition may be adjusted to comprise from 30 to 60 percent by weight of an alcohol solvent and from 70 to 40 percent by weight of a glycol ether. The final product may have a polymer concentration from 1 to 60 percent by weight depending on the polymer solubility and the particular application.

Other procedures for preparing the aminoalkyl interpolymer are known. One procedure is to treat a primary or secondary bromoalkyl acrylate with ammonia and interpolymerize the aminoalkylated monomer or to interpolymerize the bromoalkyl monomer and treat the polymer with ammonia. Another procedure is to interpolymerize the aminoalkyl acrylate or methacrylate hydrohalide, as, for example, 2-aminoethyl methacrylate. Still another procedure is to interpolymerize monomers with pendant glycidyl groups, as glycidyl acrylate, and to treat the polymer with excess ammonia at elevated temperature and applied pressure.

The aminoalkylated interpolymer is then acidified by simple mixing of the interpolymer and acids in a suitable water-miscible solvent or solvent blend. Among such solvents are the lower alkyl ethers of ethylene, propylene, dipropylene and like glycols representative of which are the butyl ether of propylene glycol, the mono- or diethyl ether of ethylene glycol, the propyl ether of diethylene glycol, the methyl ether of dipropylene glycol and an isobutyl ether of mixed propylene glycols. Other solvents will be known.

The important feature of this invention is the employment in the acidification of the pendant aminoalkyl groups of hydrobromic acid optionally containing up to 30 mole percent hydrochloric acid.

The total acid may be an amount that will neutralize all of the amine groups and may be used in excess of or less than that amount. The minimum level to be used is that which will impart water dispersibility to the acidified aminoalkylated polymer.

The acidified polymers of this invention are utilizable as the pigment binder for coating compositions such as gloss enamels. Typically, such enamels will include the pigment binder, pigment and a liquid dispersing medium. The enamels may also include other additives commonly employed in such compositions such as extender pigments, viscosity adjusting agents and preservatives.

In addition to gloss and semi-gloss enamels, the polymers may be employed in maintenance enamels, floor enamels, seamless flooring coatings, aircraft finishes, clear finishes and exterior house paint and trim enamels.

The coating compositions of this invention may be employed as formulated without pigments, or if colored coatings are desired, they may be added without detracting from the scope of the present invention.

Water-dispersible or thinnable epoxy resin coatings are prepared by mixing the acidified aminoalkylated interpolymers and the water-soluble aliphatic alcohol or glycol ether solvents discussed above with the desired epoxy resin.

The water-dispersible epoxy resin compositions of this invention may be conveniently formulated as two package of component systems wherein one package comprises the acidified aminoethylated polymer, water-miscible solvents, water and, if desired, pigments, leveling agents, antifoam agents and other modifiers and the second package or component comprises the epoxy resin and, if desired, suitable water-miscible solvents. Alternatively, the second package can consist of a pigmented or nonpigmented emulsion of epoxy resin in water. When it is desired to apply the coating to the desired substrate, the contents of the two packages are blended together and the resultant mixture applied to the substrate by brushing, spraying, etc. The containers and applicator are then easily cleaned by washing with warm water.

A wide variety of polyepoxide resins are useful in the coating compositions of this invention. One of the preferred classes of epoxy resins include the glycidyl polyethers of polyhydric phenols such as 4,4'-isopropylidene diphenol, commonly called bisphenol A. Other polyhydric phenols include resorcinol, catechol, hydroquinone, p,p'-dihydroxydiphenyl and p,p'-dihydroxyphenyl sulfone. Flame retardant or self-extinguishing resins can be readily made from the halogen-substituted, preferably bromine-substituted, polyhydric phenols. The resins are generally made by reacting an epihalohydrin with the polyhydric phenol in the presence of a strong base. Typically, these resins contain more than one epoxide group per molecule.

Other polyepoxide resins which contain more than one epoxide group per molecule are glycidyl polyethers of polyhydric alcohols, glycidyl polyethers of novolac resins (commonly called epoxy novolacs) and a variety of resins wherein the epoxide group is introduced into the resin by the epoxidation of double bonds. The glycidyl polyethers of polyhydric phenols and polyhydric alcohols having an epoxide equivalent weight from about 150 to 2000 are preferred.

In addition to the polyepoxide resins described, vinyl polymers containing pendant glycidyl groups may also be utilized in this invention. Such vinyl-glycidyl polymers may be made by copolymerizing a wide variety of vinyl monomers with a monomer such as glycidyl methacrylate. Suitable vinyl monomers include those which do not contain a group reactive with the glycidyl group and preferably include the $\alpha,\beta$-ethylenically unsaturated carboxylic acid esters of saturated alcohols containing from 1 to 8 carbon atoms and the monovinyl aromatic monomers of the benzene class such as styrene and vinyltoluene. Preferably, the polymer contains from 5 to 50 percent by weight of the vinyl-glycidyl monomer. Other suitable vinyl-glycidyl monomers include allyl glycidyl ether, glycidyl acrylate and diglycidyl maleate.

The epoxy resin coating compositions may vary considerably in solids content ranging from about 1 weight percent up to 50 weight percent depending upon the particular applications.

The epoxy resin coatings may be air dried at ambient temperatures or may be baked by conventional methods to harden and insolubilize them. It is a unique advantage of the aminoalkylated interpolymers as acidified herein that they cure epoxy resins under cool and damp conditions such as those that are encountered from time to time in applying exterior coatings. Interpolymers acidified only with hydrochloric acid or with mixtures with substantially less than 70 mole percent hydrobromic acid provide acceptable cure rates with epoxy resins only under favorable ambient conditions. That disadvantage limits the utilization of coating compositions in exterior applications.

The compositions of this invention also have acceptable application viscosity and, as coatings, show minimal flash rusting over unprimed steel and adequate resistance to corrosion, to solvents, to chemical attack and to ultraviolet light. Certain of them give no flash rusting whatsoever over unprimed steel.

Examples 1 and 2 and Comparative Runs A, B and C

An aminoethylated vinyl interpolymer was prepared by reacting a mixture of 307.5 g of methyl methacrylate, 219 g of methacrylic acid, 305 g of styrene and 542.5 g of butyl acrylate which was added over 4.25 hours to a stirred reactor containing 1015 g of 2-ethoxy ethanol at 80 ± 1°C. The catalyst solution was 30 g of azo-bis(isobutyronitrile) in 125 g of 2-ethoxy ethanol. The entire mixture was reacted for 10.25 hours at 80 ± 1°C. After completion of the reaction, the solution of the interpolymer was cooled to 62°C and 219 g of ethylenimine was added over a 180-minute period.

For Examples 1 and 2 and Comparative Runs A, B and C, the aminoethylated interpolymer was acidified by reacting the interpolymer with 4.275 moles of hydrobromic acid hydrochloric acid or mixtures thereof. This amount of acid is equivalent to 84.2 mole percent of the ethylenimine added to aminoethylate, the interpolymer. For Example 1, 100 mole percent of the acid employed to acidify the interpolymer was hydrobromic acid added as a 49.2 weight percent solution in water. For Example 2, 80 mole percent of the acid employed to acidify the interpolymer was hydrobromic acid and 20 mole percent was hydrochloric acid, the hydrobromic acid added as in Example 1 and the hydrochloric acid added as a 35 weight percent solution in water. For Comparative Run A, 60 mole percent of the acid employed to acidify the interpolymer was hydrobromic acid and 40 mole percent was hydrochloric acid. For Comparative Run B, 40 mole percent of the acid employed to acidify the interpolymer was hydrobromic acid and 60 mole percent was hydrochloric acid. For Comparative Run C, 100 mole percent of the acid employed to acidify the interpolymer was hydrochloric acid.

Coating formulations were prepared in each instance by mixing 25 g of the acidified aminoethylated interpolymer of Examples 1 and 2 and Comparative Runs A, B and C with an amount of water such that each formulation has the same viscosity and with 9.3 g of the diglycidyl ether of bisphenol A having an epoxy equivalent weight in the range of 182 to 190, 1.7 g of the diglycidyl ether of a polypropylene glycol having a molecular weight of 400, the diglycidyl ether having an epoxy equivalent weight in the range of 305 to 335, and 2.0 g of the methyl ether of dipropylene glycol. Each formulation was coated on two separate sheets of cold rolled, untreated steel. One coated sheet was placed outdoors and allowed to cure at 6°C and 100 percent relative humidity overnight. The second coated sheet of each formulation was placed in a controlled chamber and allowed to cure at 9°C and 90 percent relative humidity for six hours. After curing, each sheet was placed under running water to determine the relative level of curing by observing whether or not the cured film would remain on the steel sheet. See Table I for the results of these tests.

TABLE I

| | Examples | | Comparative Runs | | |
| --- | --- | --- | --- | --- | --- |
| | 1 | 2 | A | B | C |
| Mole Ratio HBr/HCl | 100/0 | 80/20 | 60/40 | 40/60 | 0/100 |
| Water Added   g | 41 | 38 | 36.5 | 35 | 35 |
| Outdoor Cured Films, Water Test | Film Intact | Film Intact | Film Washed Off | Film Washed Off | Film Washed Off |
| Controlled Chamber Cured Films, Seconds Under Running Water Before Film Failed | >30 | >30 | 22 | 15 | 7 |

It was observed that the panels coated with the aminoethylated interpolymer acidified with 100 mole percent hydrobromic acid developed rust spots which were water sensitive. The panels coated with the aminoethylated interpolymer neutralized with 80 mole percent hydrobromic acid and 20 mole percent hydrochloric acid did not develop rust spots.

**Claims**

1. A water-thinnable coating composition comprising a water-miscible solvent, a water-soluble acidified aminoalkylated vinyl interpolymer and an epoxy resin characterized in that the aminoalkylated vinyl interpolymer is acidified with hydrobromic acid, optionally containing up to 30 mole percent hydrochloric acid.

2. A water-thinnable coating composition as in Claim 1 characterized in that the aminoalkylated vinyl interpolymer is acidified with a mixture of 80 mole percent hydrobromic acid and 20 mole percent hydrochloric acid.

**Revendications**

1. Composition de revêtement diluable à l'eau comprenant un solvant miscible avec l'eau, un interpolymère vinylique amino-alkylé, acidifié, soluble dans l'eau, et une résine époxy, caractérisée par le fait que l'interpolymère vinylique amino-alkylé est acidifié avec l'acide bromhydrique, contenant éventuellement jusqu'à 30% en mole d'acide chlorhydrique.

2. Composition de revêtement diluable à l'eau selon la revendication 1, caractérisée par le fait que l'interpolymère vinylique amino-alkylé est acidifié avec un mélange de 80% mole d'acide bromhydrique et de 20% en mole d'acide chlorhydrique.

**Patentansprüche**

1. Wasserverdünnbare Überzugszusammensetzung, die aus einem mit Wasser mischbaren Lösungsmittel, einem in Wasser löslichen acidifizierten aminoalkylierten · Vinylmischpolymerisat und einem Epoxyharz besteht, dadurch gekennzeichnet, daß das aminoalkylierte Vinylmischpolymerisat mit Bromwasserstoffsäure acidifiziert wird, die gegebenenfalls bis zu 30 Mol-% Chlorwasserstoffsäure enthält.

2. Wasserverdünnbare Überzugszusammensetzung nach Anspruch 1, dadurch gekennzeichnet, daß das aminoalkylierte Vinylmischpolymerisat mit einer Mischung aus 80 Mol-% Bromwasserstoffsäure und 20 Mol-% Chlorwasserstoffsäure acidifiziert wird.